Europäisches Patentamt

European Patent Office

Office européen des brevets

(19)

(11) Veröffentlichungsnummer: **0 379 088**
**A2**

# (12) EUROPÄISCHE PATENTANMELDUNG

(21) Anmeldenummer: **90100619.7**

(22) Anmeldetag: **12.01.90**

(51) Int. Cl.⁵: **B29C 53/78, F16L 9/16**

(30) Priorität: **17.01.89 CH 137/89**

(43) Veröffentlichungstag der Anmeldung:
**25.07.90 Patentblatt 90/30**

(84) Benannte Vertragsstaaten:
**AT BE DE DK ES FR GB GR IT NL SE**

(71) Anmelder: **AMETEX AG**
**Eternitstrasse 3**
**CH-8867 Niederurnen(CH)**

(72) Erfinder: **Caluori, André**
**Gassa Suto 52**
**CH-7013 Domat/Ems(CH)**

(74) Vertreter: **Scheidegger, Werner & Co.**
**Stampfenbachstrasse 48 Postfach**
**CH-8023 Zürich(CH)**

(54) **Kunststoffband zur Herstellung von Rohren.**

(57) Das Kunststoffband zur Herstellung von Druck-rohren im Wickelverfahren weist an beiden Längs-rändern komplementäre Verbindungsmittel in Form von jeweils zwei parallelen Längsrippen (3,4;5,6) auf, von denen jeweils die an der Bandaussenkante lie-gende Rippe (3;5) mit einem flexiblen Anschlaglap-pen (9;10) ausgerüstet ist, welcher bei zusammenge-fügten Bandrändern in den komplementären Rippen-zwischenraum (7 bzw. 8) zu liegen kommt und dort als Verschluss hinter einen Gegenanschlag (11;12) der komplementären innenliegenden Rippe (4;6) zu liegen kommt. Es kann im Verbindungsspalt ein sich über dessen Gesamtbreite erstreckendes Dichtungs-band vorgesehen sein.

Fig. 1

EP 0 379 088 A2

## Kunststoffband zur Herstellung von Rohren

Die vorliegende Erfindung betrifft ein Kunststoffband zur Herstellung von Rohren, insbesondere von Druckrohren im Wickelverfahren, wobei das Band entlang der beiden Längsränder komplementäre Verbindungsmittel aufweist, welche gegenseitig miteinander in Verbindungseingriff gelangen, wenn beim schraubenförmigen Wickeln des Bandes aneinandergrenzende Bandränder miteinander zu verbinden sind.

Derartige Kunststoffbänder zur Herstellung von Rohren sind bekannt, wobei allerdings die Verbindungsmittel an den Bandrändern so ausgestaltet sind, dass die damit gebildeten Rohre höheren Innendrücken kaum genügen würden.

Aufgabe der vorliegenden Erfindung ist somit die Schaffung eines zur Herstellung von Druckrohren geeigneten Kunststoffbandes. Dieses soll nach Möglichkeit mit den bisherigen Einrichtungen zu Rohren gewickelt werden können, welche auch ohne Aussenabstützung höhere Innendrücke (Betriebsdrücke) von beispielsweise 20 bar zulassen. Grundvoraussetzung ist selbstverständlich, dass die Dicke des Kunststoffbandes so gewählt wird, dass die Wandstärke eines damit gebildeten Rohres dem zu erwartenden Betriebsdruck standhält.

Die Aufgabe wird erfindungsgemäss dadurch gelöst, dass die Verbindungsmittel an jedem Bandrand aus zwei in Bandlängsrichtung verlaufenden, aus der Bandebene abstehenden parallelen Rippen bestehen, zwischen denen eine ebenfalls längsverlaufende Ausnehmung vorgesehen ist, wobei die eine Rippe an der Bandaussenkante liegt und mit einem flexiblen Anschlaglappen ausge rüstet ist, während die parallele innenliegende andere Rippe einen zur Ausnehmung zwischen den Rippen hin abstehenden, ebenfalls längsverlaufenden biegesteifen Anschlag bildenden Vorsprung aufweist, und dass die die Verbindungsmittel bildenden Rippenpaare am einen Bandrand bezüglich der Bandebene gegensinnig zum Rippenpaar am anderen Bandrand abstehen.

Dank der neuen Konstruktion der Verbindungsmittel, welche im Vergleich zu früheren Lösungen nicht im wesentlichen übereinander, sondern hintereinander liegende Anschläge aufweist, wird beim gewickelten Rohr entlang der schraubenlinienförmig verlaufenden Verbindungsnaht ein auch höheren Drücken standhaltender Verschluss gebildet, welcher gleichzeitig auch die Dichtigkeitsanforderungen erfüllt.

Um die Dichtheit noch zu verbessern, wird vorzugsweise am einen Bandrand ein sich über die Verbindungsmittel erstreckendes, längsverlaufendes Dichtungsband vorgesehen, welches üblicherweise aus gummielastischem Material besteht.

Diese der Abdichtung dienende Konstruktion kann zudem so ausgestaltet sein, dass die Längsränder des Dichtungsbandes Verdickungen aus ebenfalls gummielastischem Material aufweisen, wobei sich diese Verdickungen bei zusammengefügten Bandrändern gegen Teile von beiden aneinanderstossenden Bandränder anlegen und den Verbindungsspalt verschliessen.

Die Erfindung wird nachstehend anhand eines in der Zeichnung dargestellten Ausführungsbeispiels noch etwas näher erläutert. Es zeigt:

Fig. 1 einen Querschnitt durch ein erfindungsgemässes Kunststoffband;

Fig. 2 einen Ausschnitt, im Längsschnitt, aus einem mittels eines erfindungsgemässen Bandes gewickelten Rohres, und

Fig. 3 und 4 Ausschnitte in vergrössertem Massstab der mit Material höherer Elastizität versehenen Bandteile.

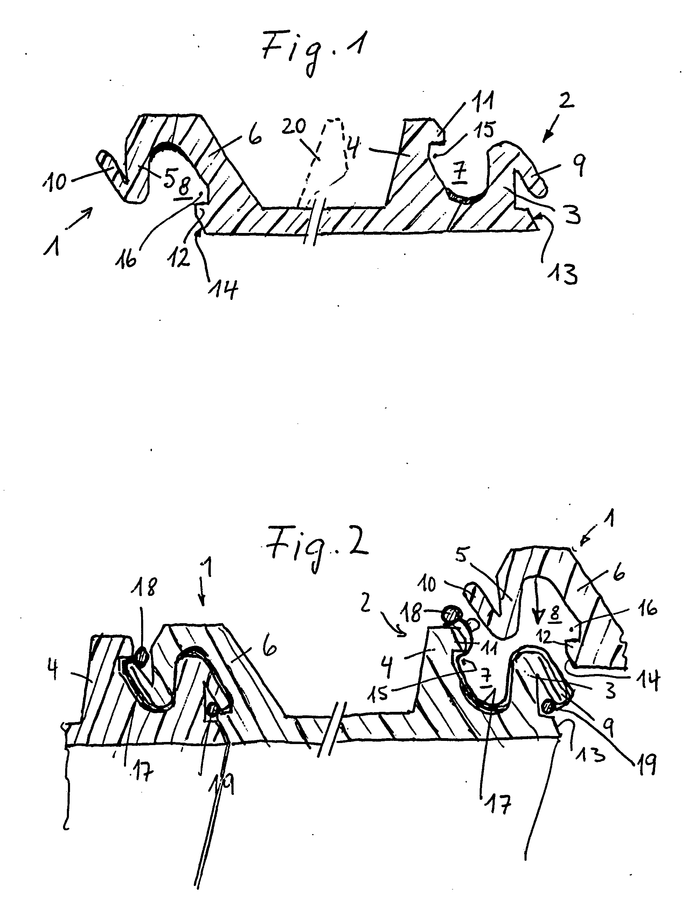

Die Zeichnung, insbesondere Fig. 1, zeigt ein Kunststoffband, welches zur Herstellung von Rohren, insbesondere Druckrohren im bekannten Wickelverfahren vorgesehen ist.

Die an den Bandrändern 1,2 vorgesehenen komplementären Verbindungsmittel sind jeweils aus zwei in Bandlängsrichtung verlaufenden, aus der Bandebene im wesentlichen rechtwinklig abstehenden parallelen Rippen 3 und 4 bzw. 5 und 6 gebildet. Zwischen den entsprechenden Rippenpaaren 3,4 bzw. 5,6 befindet sich eine Ausnehmung in Form einer längsverlaufenden Nut 7 bzw. 8.

Von jedem Rippenpaar liegt jeweils eine Rippe 3 bzw. 5 an der Bandaussenkante. Jede dieser Rippen ist mit einem flexiblen Anschlaglappen 9 bzw. 10 versehen, welcher sich beim Zusammenfügen von aneinanderstossenden Bandrändern gegen die äussere Rippenflanke federelastisch zurückbiegen kann, damit die entsprechende Rippe 3 bzw. 5 mit dem zugehörigen Anschlaglappen 9 bzw. 10 in die komplementäre Nut 8 bzw. 7 eingeschnappt werden kann.

An den der Ausnehmung 7 bzw. 8 zugekehrten Flanken der innenliegenden Rippen 4 bzw. 6 ist in Nähe des äusseren Endes jeweils ein biegesteifer Anschlag in Form eines Vorsprunges 11 bzw. 12 vorgesehen (diese werden im Prinzip von der oberen Fläche einer sich in der entsprechenden Rippenflanke befindlichen weiteren längsverlaufenden Ausnehmung 15 bzw. 16 gebildet). In diese Ausnehmungen 15, 16 kommen beim verschlossenen Wickelband die komplementären Anschlaglappen 10 bzw. 9 eines anliegenden Bandrandes zu liegen, wobei die Enden der Anschlaglappen 9 bzw. 10 in radialer Richtung betrachtet, gegen die Vorsprünge 11 bzw. 12 zu liegen kommen und damit den Verschluss gewährleisten.

Im Bodenbereich der Ausnehmungen 7 und 8 besteht beim gezeigten Ausführungsbeispiel ein Teil der Nutenwandung aus einem Material, welches im Vergleich mit dem übrigen Bandmaterial eine wesentlich höhere Elastizität besitzt. Dieser Materialteil kann eingelegt oder aber bei der Bandherstellung koextrudiert werden. Ein solches "weicheres" Material besitzt möglichst gummielastische Eigenschaften und dient einer verbesserten Abdichtung des Verbindungsspaltes (vermag auch Materialtoleranzen auszugleichen).

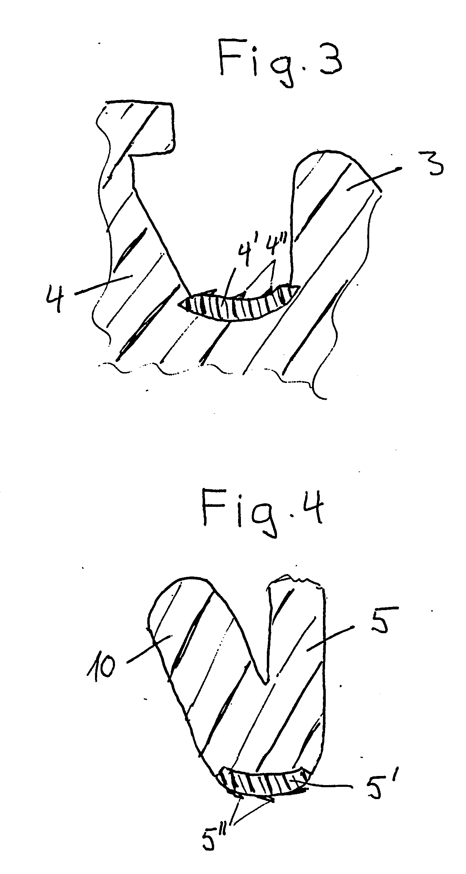

Es ist auch möglich, das Material mit höherer Elastizität statt im Bodenbereich der Ausnehmungen (Fig. 3) am gegenüberliegenden Rippenkopf anzubringen, wie dies Fig. 4 zeigt. Zudem kann das "weichere" bzw. elastischere Material an der Oberfläche gerippt sein oder Lamellen 4″ bzw. 5″ aufweisen, welche entgegen der Druckrichtung (aus dem Rohrinnern) geneigt verlaufen, um damit die Dichtwirkung zu verbessern.

Obwohl grundsätzlich mit diesem Kunststoffband ein Druckrohr mit ausreichender Dichtigkeit gewickelt werden kann, ist vorgesehen, die Dichtwirkung dadurch zu erhöhen oder mindestens zu gewährleisten, dass in den Verbindungsspalt zwischen miteinander zu verbindenden Bandränder ein Dichtungsband 17 eingelegt wird.

Das Dichtungsband 17, vorzugsweise aus relativ dünnem gummielastischem Material, ist üblicherweise direkt am einen Bandrand 12 angeordnet (durch mindestens provisorisches Fixieren, z.B. durch ein Klebemittel oder mechanische Fixierung) und erstreckt sich in der Breite mindestens über die der Nute 7 zugekehrte Flanke der innenliegenden Rippe 4, entlang der Wand der Nute 7, über die äussere Rippe 3 und deren Anschlaglappen 9.

Das Dichtungsband 17 verläuft ebenfalls entlang dem ganzen Bandrand und weist an seinen Längsrändern vorzugsweise Verdickungen 18,19 auf, welche bei zusammengefügten Bandrändern den Verbindungsspalt von beiden Seiten her verschliessen, zumindest jedoch als eine Art Längsführung dienen.

Auch das Dichtungsband 17 kann, ähnlich wie die relativ elastischen Abschnitte 4′,5′ eine gerippte oder lamellierte Oberfläche (eventuell beidseitig) aufweisen, um gegebenenfalls die Dichtwirkung zu verbessern.

Aus Fig. 1 geht hervor, wie der eine Rand des Kunststoffbandes in an sich bekannter Weise mit einem angrenzenden, komplementär ausgebildeten Rand zusammengefügt wird.

Die Bänder, welche eine Breite z.B. zwischen 5 und 20 cm aufweisen, können mindestens auf einer Seite, üblicherweise der Aussenseite, zwischen den beidseitigen Randverbindungsmitteln noch weitere Rippen (in Fig. 1 mit 20 angedeutet) aufweisen, welche entweder als Verstärkungsrippen oder als Verankerungsrippen dienen.

## Ansprüche

1. Kunststoffband zur Herstellung von Rohren, insbesondere von Druckrohren im Wickelverfahren, wobei das Band entlang der beiden Längsräder komplementäre Verbindungsmittel aufweist, welche gegenseitig miteinander in Verbindungseingriff gelangen, wenn beim schraubenförmigen Wickeln des Bandes aneinandergrenzende Bandränder miteinander zu verbinden sind, dadurch gekennzeichnet, dass die Verbindungsmittel an jedem Bandrand (1 bzw. 2) aus zwei in Bandlängsrichtung verlaufenden, aus der Bandebene abstehenden parallelen Rippen (3,4;5,6) bestehen, zwischen denen eine ebenfalls längsverlaufende Ausnehmung (7;8) vorgesehen ist, wobei die eine Rippe (3;5) an der Bandaussenkante liegt und mit einem flexiblen Anschlaglappen (9; 10) ausgerüstet ist, während die parallele innenliegende andere Rippe (4;6) einen zur Ausnehmung (7;8) zwischen den Rippen (3,4;5,6) hin abstehenden, ebenfalls längsverlaufenden biegesteifen Anschlag bildenden Vorsprung (11;12) aufweist, und dass die die Verbindungsmittel bildenden Rippenpaare (3,4) am einen Bandrand bezüglich der Bandebene gegensinnig zum Rippenpaar (5,6) am anderen Bandrand abstehen.

2. Kunststoffband nach Anspruch 1, dadurch gekennzeichnet, dass die äussersten Bandkanten im Bereich der eigentlichen Bandebene komplementär angeschrägte Kontaktflächen (13; 14) aufweisen.

3. Kunststoffband nach einem der Ansprüche 1 und 2, dadurch gekennzeichnet, dass die Ausnehmungen (7;8) zwischen den Rippen (3,4;5,6) nutenförmig ausgebildet sind und dass das Material im jeweiligen Nutengrund eine im Vergleich zum übrigen Bandmaterial wesentlich höhere Elastizität aufweist.

4. Kunststoffband nach einem der Ansprüche 1-3, dadurch gekennzeichnet, dass das Material im Bereich des oberen Endes der aussenliegenden Rippe (3;5) eine im Vergleich zum übrigen Rippenmaterial höhere Elastizität aufweist.

5. Kunststoffband nach Anspruch 3 oder 4, dadurch gekennzeichnet, dass die freie Oberfläche des Materialabschnittes mit höherer Elastizität gerippt oder lamelliert ist, wobei die Lamellen gegen die Druckrichtung geneigt angeordnet sind.

6. Kunststoffband nach Anspruch 3 oder 4, dadurch gekennzeichnet, dass das Material höherer Elastizität am Nutengrund bzw. am oberen Rippenende in das übrige Bandmaterial eingelegt, aufgeklebt oder mit diesem koextrudiert ist.

7. Kunststoffband nach einem der Ansprüche 1-6, dadurch gekennzeichnet, dass in der der Ausnehmung zugekehrten Flanke der jeweils innenliegenden Rippe (4;6) eine längsverlaufende Ausnehmung (15;16) vorgesehen ist, deren oberes Ende durch den Anschlag bzw. Vorsprung (11;12) abgeschlossen ist, wobei diese Ausnehmung (15;16) der Aufnahme des Anschlaglappens (10;9) der jeweiligen Gegenrippe dient.

8. Kunststoffband nach einem der Ansprüche 1-7, dadurch gekennzeichnet, dass am einen Bandrand ein sich über die Verbindungsmittel (3,4) erstreckendes, längsverlaufendes Dichtungsband (17) vorgesehen ist.

9. Kunststoffband nach Anspruch 8, dadurch gekennzeichnet, dass das Dichtungsband (17) ein Band aus gummielastischem Material ist.

10. Kunststoffband nach Anspruch 9, dadurch gekennzeichnet, dass mindestens die eine Oberfläche des Dichtungsbandes (17) mit Rippen oder Lamellen versehen ist.

11. Kunststoffband nach Anspruch 9 oder 10, dadurch gekennzeichnet, dass die Längsränder des Dichtungsbandes (17) Verdickungen (18,19) aus ebenfalls gummielastischem Material aufweisen, wobei sich diese Verdickungen (18,19) bei zusammengefügten Bandrändern gegen Teile von beiden aneinanderstossenden Bandränder anlegen und den Verbindungsspalt verschliessen.

12. Kunststoffband nach einem der Ansprüche 1-11, dadurch gekennzeichnet, dass mindestens auf einer Bandaussenseite zwischen den Verbindungsmitteln (3,4; 5,6) ebenfalls längsverlaufende Verstärkungsrippen (20) vorgesehen sind.

Fig.1

Fig.2

# Fig. 3

# Fig. 4